(19) 

Europäisches
Patentamt
European
Patent Office
Office européen
des brevets

(11) **EP 4 687 314 A1**

(12) **EUROPEAN PATENT APPLICATION**

(43) Date of publication:
04.02.2026 Bulletin 2026/06

(21) Application number: 25193147.3

(22) Date of filing: 31.07.2025

(51) International Patent Classification (IPC):
*H04J 3/06* (2006.01)

(52) Cooperative Patent Classification (CPC):
H04J 3/0667

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 01.08.2024 CN 202411052528

(71) Applicants:
• **Kingfar International Inc.
Beijing 100085 (CN)**

• **Nanjing Kingfar Health Technology Inc.
Nanjing, Jiangsu 211112 (CN)**

(72) Inventors:
• **ZHAO, Qichao
Beijing, 100085 (CN)**
• **YANG, Ran
Beijing, 100085 (CN)**

(74) Representative: **Meyer-Dulheuer MD Legal
Patentanwälte PartG mbB
Hanauer Landstr. 287-289
60314 Frankfurt am Main (DE)**

(54) **METHOD, SYSTEM AND DEVICE FOR CLOCK SYNCHRONIZATION IN HUMAN-MACHINE-ENVIRONMENT DATA ACQUISITION AND MEDIUM**

(57) Provided are a method, system and device for clock synchronization in human-machine-environment data acquisition and a medium. According to the method, after acquiring the first human-machine-environment data acquisition task initiated by the second device, the first device within the local area network performs message interaction with the second device, and calibrates an acquisition moment of the first human-machine-environment data using clock information of the second device as a calibration clock, thereby realizing clock synchronization between multiple devices within a local area network environment. Finally, after binding the first human-machine-environment data with the calibrated acquisition moment, the first device sends it to the second device. In this way, the second device can align the first human-machine-environment data with the second human-machine-environment data according to the calibrated acquisition moment, thereby aligning human-machine-environment data collected by different data collectors according to the calibration moment.

FIG. 4

EP 4 687 314 A1

**Description**

**TECHNICAL FIELD**

Embodiments of the present disclosure relates to the field of electrical digital data processing technologies, biological information technologies, human factors intelligence technologies, human factors and ergonomics technologies, and in particular, to a method, a system and a device for clock synchronization in human-machine-environment data acquisition and a medium.

**BACKGROUND**

In virtual reality and simulation environments as well as various complex natural environments or real conditions, multimodal physiological data of a user can be collected in a mode in which multi-host computers are connected to acquisition devices, thereby synchronously recording changes in the user's multimodal physiological data such as psychological, physiological and/or behavioral data in real time, and synchronously analyzing the user's behavioral performance, cognitive load, fatigue and/or emotional arousal and other states.

In a process in which the multi-host computers are connected to the acquisition devices to acquire physiological data of a user, in order to ensure the consistency and accuracy of the physiological data, clocks of the multi-host computers need to be calibrated, so that the clocks of the host computers remain synchronized. In the related art, each host computer is generally connected to an Internet server to calibrate the clock of each host computer through the server's clock. However, this solution relies on the Internet for implementation and cannot be used in an environment without the Internet. Even in an environment with the Internet, if the network condition of the Internet is poor, the precision of clock synchronization between the host computers is affected.

**SUMMARY**

Embodiments of the present disclosure provides a method, a system and a device for clock synchronization in human-machine-environment data acquisition, and further provides a computer-readable storage medium, so as to implement clock synchronization within a local area network environment, thereby improving the precision and stability of clock synchronization.

In a first aspect, an embodiment of the present disclosure provides a method for clock synchronization in human-machine-environment data acquisition, executed by a first device, and including: acquiring a first human-machine-environment data acquisition task, where the first human-machine-environment data acquisition task is initiated by a second device within a local area network of the second device, and the second device and the first device are located in a same local area network; performing message interaction with the second device to obtain timestamps during a message interaction process, where the timestamps include clock information of the second device, and the clock information of the second device is a calibration clock for a current acquisition task; determining a time offset of the first device relative to the second device based on the timestamps during the message interaction process; calibrating an acquisition moment of first human-machine-environment data acquired by the first device according to the time offset, where the first human-machine-environment data is collected by the first device and/or at least one data collector connected to the first device, and the at least one data collector is configured to collect human-related data, machine-related data, human-machine interaction-related data, and/or environment-related data; and sending the first human-machine-environment data bound with the calibrated acquisition moment to the second device, so that the second device aligns the first human-machine-environment data with second human-machine-environment data acquired by the second device based on the calibrated acquisition moment.

According to the method for clock synchronization in human-machine-environment data acquisition, after acquiring the first human-machine-environment data acquisition task initiated by the second device, the first device within the local area network performs message interaction with the second device to obtain the timestamps during the message interaction process. Then the first device calibrates the acquisition moment of the first human-machine-environment data acquired by the first device by using the clock information of the second device as the calibration clock, thereby realizing clock synchronization among multiple devices in a local area network environment, avoiding the dependence of clock synchronization on the Internet, and improving the accuracy and stability of clock synchronization. Finally, after binding the first human-machine-environment data with the calibrated acquisition moment, the first device sends it to the second device. In this way, the second device can align the first human-machine-environment data with the second human-machine-environment data acquired by the second device according to the above calibrated acquisition moment, thereby aligning human-machine-environment data collected by different data collectors according to the calibration moment, and facilitating human factors and ergonomics analysis on factors such as humans, machines, human-machine interactions, and environments.

**EP 4 687 314 A1**

In a possible implementation, said performing message interaction with the second device to obtain timestamps during a message interaction process includes: sending a clock synchronization request message to the second device, where the clock synchronization request message carries a first timestamp, and the first timestamp is a moment when the first device sends the clock synchronization request message; and receiving a clock synchronization response message sent by the second device, and obtaining a second timestamp, where the second timestamp is a moment when the first device receives the clock synchronization response message, the clock synchronization response message carries a third timestamp and a fourth timestamp, the third timestamp is a moment when the second device starts to receive the clock synchronization request message, and the fourth timestamp is a moment when the second device sends the clock synchronization response message.

In a possible implementation, said determining a time offset of the first device relative to the second device based on the timestamps during the message interaction process includes: determining the time offset of the first device relative to the second device based on the first timestamp, the second timestamp, the third timestamp, and the fourth timestamp.

In a possible implementation, said acquiring a first human-machine-environment data acquisition task includes: acquiring at least two first human-machine-environment data acquisition tasks, where the at least two first human-machine-environment data acquisition tasks are respectively initiated by different second devices within the local area network, and each of the at least two first human-machine-environment data acquisition tasks carries an initiating process identifier thereof and a clock synchronization server port of a corresponding second device.

In a possible implementation, said performing message interaction with the second device includes: determining a second human-machine-environment data acquisition task to be joined by the first device among the at least two first human-machine-environment data acquisition tasks based on the initiating process identifier and the clock synchronization server port that are carried by each of the at least two first human-machine-environment data acquisition tasks; and performing the message interaction with the second device that initiates the second human-machine-environment data acquisition task.

In a possible implementation, said acquiring a first human-machine-environment data acquisition task includes: acquiring the first human-machine-environment data acquisition task broadcast by the second device within the local area network; or receiving the first human-machine-environment data acquisition task sent by the second device through the local area network.

In a possible implementation, the method further includes: after the execution of the first human-machine-environment data acquisition task is completed, initiating a third human-machine-environment data acquisition task within the local area network, where the third human-machine-environment data acquisition task uses clock information of the first device as a calibration clock; or in response to no human-machine-environment data acquisition task currently being executed within the local area network, initiating a third human-machine-environment data acquisition task within the local area network, where the third human-machine-environment data acquisition task uses clock information of the first device as a calibration clock.

In a possible implementation, the data collector includes one or a combination of the following: a human-related data collector, a machine-related data collector, a human-machine interaction-related data collector, and an environment-related data collector; the human-related data include one or a combination of the following: skin electrodermal and temperature data, pulse data, blood pressure data, blood oxygen data, electrocardiogram data, electromyography data, muscle oxygen data, respiratory data, biomechanical data, near-infrared brain imaging data, electroencephalogram data, transcranial stimulation data, heart rate variability data, heart rate data, image/video data, sound data, eye-tracking data, gesture or motion data; the machine-related data include one or a combination of the following: machine operation data, fault alarm data, machine manipulation data, machine model data, machine communication data, and machine positioning data; the human-machine interaction-related data include one or a combination of the following: human-machine voice-interaction data, human-machine text-interaction data, human-machine touch-interaction data, human-machine gesture or action-interaction data, human-machine electroencephalogram-interaction data, human-machine eye-tracking interaction data, and human-machine expression-interaction data; and the environment-related data include one or a combination of the following: location data, humidity data, temperature data, chromaticity data, brightness data, weather data, road condition data, traffic data, stimulus signal data, event or signal marking data.

In a second aspect, an embodiment of the present disclosure further provides a method for clock synchronization in human-machine-environment data acquisition, executed by a second device, and including: initiating a human-machine-environment data acquisition task within a local area network of the second device, so that at least one first device acquires the human-machine-environment data acquisition task, where the at least one first device and the second device are located in a same local area network; performing message interaction with the at least one first device, so that the at least one first device obtains timestamps during a message interaction process, and determines a time offset of the at least one first device relative to the second device based on the timestamps, where the timestamps includes clock information of the second device, and the clock information of the second device is a calibration clock for a current acquisition task; receiving first human-machine-environment data sent by the at least one first device and a calibration moment bound with the first human-machine-environment data, where the first human-machine-environment data is

3

collected by the at least one first device and/or at least one data collector connected to the at least one first device, the at least one data collector is configured to collect human-related data, machine-related data, and/or environment-related data, and the calibration moment bound with the first human-machine-environment data is a moment obtained by the at least one first device calibrating an acquisition moment of the first human-machine-environment data acquired by the at least one first device based on the time offset; and aligning the first human-machine-environment data with second human-machine-environment data acquired by the second device based on the calibration moment bound with the first human-machine-environment data, where the second human-machine-environment data is collected by the second device and/or at least one data collector connected to the second device.

According to the method for clock synchronization in human-machine-environment data acquisition, the second device initiates a human-machine-environment data acquisition task within the local area network of the second device, so that at least one first device can acquire the human-machine-environment data acquisition task. Then, the second device performs message interaction with the first device, so that the first device obtains the timestamps during the message interaction process, and determines the time offset of the first device relative to the second device according to the timestamps, thereby realizing clock synchronization among devices within the local area network environment, avoiding the dependence of clock synchronization on the Internet, and improving the accuracy and stability of clock synchronization. After that, the second device receives the first human-machine-environment data sent by the first device, and the acquisition calibration moment bound with the first human-machine-environment data, and aligns the first human-machine-environment data with the second human-machine-environment data acquired by the second device according to the acquisition calibration moment bound with the first human-machine-environment data, thereby aligning human-machine-environment data collected by different data collectors according to the calibration moment, and facilitating human factors and ergonomics analysis on factors such as humans, machines, human-machine interactions, and environments.

In a possible implementation, said initiating a human-machine-environment data acquisition task within a local area network of the second device, so that at least one first device acquires the human-machine-environment data acquisition task includes: broadcasting the human-machine-environment data acquisition task within the local area network; or sending the human-machine-environment data acquisition task to the at least one first device through the local area network.

In a possible implementation, the method further includes: creating a socket, and binding the socket to a clock synchronization server port of the second device, where the human-machine-environment data acquisition task initiated by the second device carries an initiating process identifier of the human-machine-environment data acquisition task and the clock synchronization server port of the second device.

In a possible implementation, before said aligning the first human-machine-environment data with second human-machine-environment data acquired by the second device based on the calibration moment bound with the first human-machine-environment data, the method further includes: receiving an acquisition moment of the first human-machine-environment data sent by the at least one first device; and acquiring the second human-machine-environment data, an acquisition moment of the second human-machine-environment data, and a calibration moment bound with the second human-machine-environment data, where the acquisition moment of the second human-machine-environment data is the same as the calibration moment of the second human-machine-environment data.

In a possible implementation, said aligning the first human-machine-environment data with second human-machine-environment data acquired by the second device based on the calibration moment bound with the first human-machine-environment data includes: aligning the first human-machine-environment data with the second human-machine-environment data based on the calibration moment bound with the first human-machine-environment data and the calibration moment bound with the second human-machine-environment data.

In a possible implementation, after said aligning the first human-machine-environment data with the second human-machine-environment data, the method further includes: displaying the first human-machine-environment data and the second human-machine-environment data with a same calibration moment at a same moment.

In a third aspect, an embodiment of the present disclosure provides an electronic device, including: one or more processors; a memory; a plurality of application programs; and one or more computer programs. The one or more computer programs are stored in the memory and include instructions that, when executed by the electronic device, enable the electronic device to implement the method provided in the first aspect, or enable the electronic device to implement the method provided in the second aspect.

In a fourth aspect, an embodiment of the present disclosure provides a system for clock synchronization in human-machine-environment data acquisition, including: a plurality of electronic devices provided in the third aspect. At least one electronic device is connected to at least one other electronic device and/or at least one data collector, the plurality of electronic devices and the at least one data collector are located in a same local area network. Any electronic device is configured to initiate a human-machine-environment data acquisition task, and other electronic devices and/or data collectors connected to the any electronic device is configured to perform the human-machine-environment data acquisition task by using clock information of the any electronic device as a calibration clock of the human-machine-environment data acquisition task.

In a possible implementation, said any electronic device of the plurality of electronic devices is configured to initiate a human-machine-environment data acquisition task includes: after the execution of other human-machine-environment data acquisition tasks sent by other electronic devices is completed, the any electronic device is configured to send the human-machine-environment data acquisition task, where when executing the other human-machine-environment data acquisition tasks, the any electronic device is configured to use clock information of the other electronic device as a calibration clock; or in response to no human-machine-environment data acquisition task currently being executed within the local area network, the any electronic device is configured to initiate the human-machine-environment data acquisition task.

In a fifth aspect, an embodiment of the present disclosure provides a computer-readable storage medium on which a computer program is stored, and the computer program, when running on a computer, enable the computer to implement the method provided in the first aspect, or enable the computer to implement the method provided in the second aspect.

In a sixth aspect, an embodiment of the present disclosure provides a computer program, and the computer program, when executed by a computer, is configured to implement the method according to the first aspect or the second aspect.

In one possible design, the program in the sixth aspect may be stored entirely or partially on a storage medium packaged together with the processor, or may be stored partially or entirely on a memory not packaged together with the processor.

## BRIEF DESCRIPTION OF DRAWINGS

FIG. 1 is a schematic structural diagram of a first device according to an embodiment of the present disclosure;
FIG. 2 is a schematic structural diagram of a system for clock synchronization in human-machine-environment data acquisition according to an embodiment of the present disclosure;
FIG. 3 is a schematic diagram of calculating a time offset according to an embodiment of the present disclosure;
FIG. 4 is a flowchart of a method for clock synchronization in human-machine-environment data acquisition according to an embodiment of the present disclosure;
FIG. 5 is a flowchart of a method for clock synchronization in human-machine-environment data acquisition according to another embodiment of the present disclosure; and
FIG. 6 is a schematic structural diagram of a first device according to another embodiment of the present disclosure.

## DESCRIPTION OF EMBODIMENTS

Part of terms used in the embodiments of the present disclosure is merely used to explain specific embodiments of the present disclosure, and is not intended to limit the present disclosure.

In a process in which multi-host computers are connected to a data acquisition device to collect data, in order to ensure the consistency and accuracy of data, in related art, each host computer is connected to an Internet public network time protocol (NTP) server, and calibrates the local time according to the local time and the public NTP server time.

NTP is a protocol for synchronizing clocks on computer networks that allows clients to request and receive time from a server, and the server in turn receive precise coordinated universal time (UTC) from authoritative clock sources (such as an atomic clock or a global positioning system (GPS)).

A solution of connecting to the public NTP server for clock synchronization is a common solution for time synchronization through the Internet. However, this solution cannot be implemented in a local area network environment that is not connected to the Internet, and relies on a good Internet network condition. A poor network condition can affect the accuracy of time offset, thereby affecting the precision of clock synchronization.

The method for clock synchronization in human-machine-environment data acquisition according to the embodiments of the present disclosure can be applied to an electronic device, where the electronic device can be a personal computer (PC), a smart phone, a tablet computer, a wearable device, a vehicle-mounted device, an augmented reality (AR)/virtual reality (VR) device, a notebook computer, an ultra-mobile personal computer (UMPC), or the like. A specific type of the electronic device is not limited in the embodiments of the present disclosure.

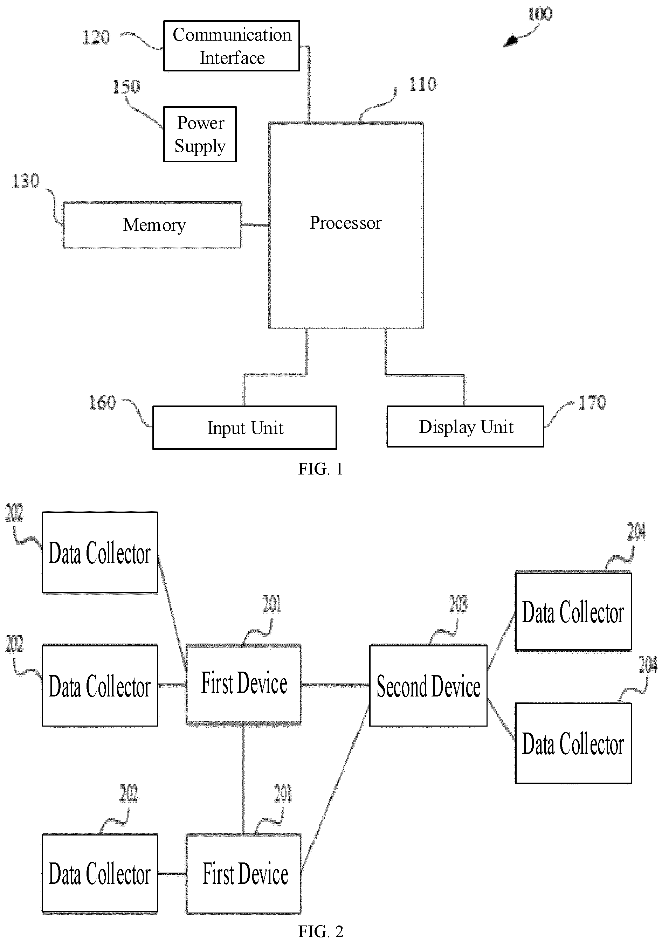

Exemplarily, FIG. 1 is a schematic structural diagram of an electronic device according to an embodiment of the present disclosure. As shown in FIG. 1, the electronic device 100 may include one or more processors 110, a memory 130, a plurality of application programs, and one or more computer programs. The one or more computer programs are stored in the memory 130, and the one or more computer programs include an instruction that, when executed by the electronic device 100, is configured to enable the electronic device 100 to implement the method for clock synchronization in human-machine-environment data acquisition according to the embodiments of the present disclosure.

Further, the electronic device 100 may further include a communication interface 120. The processor 110, the communication interface 120, and the memory 130 can communicate with each other through an internal connection path, to transmit a control signal and/or a data signal.

The processor 110 and the memory 130 can be integrated into a processing apparatus, but more commonly, are independent components. The processor 110 is configured to execute program codes stored in the memory 130. During specific implementation, the memory 130 can also be integrated into the processor 110, or be independent of the processor 110.

Further, to make functions of the electronic device 100 more complete, the electronic device 100 can further include one or more of an input unit 160 and a display unit 170.

In an embodiment, the electronic device 100 can further include a power supply 150 for supplying power to various components or circuits in the electronic device 100.

It should be understood that the processor 110 in the electronic device 100 shown in FIG. 1 may be a system on chip (SOC), and the processor 110 may include a central processing unit (CPU), or may further include other types of processors, such as a graphics processing unit (GPU), etc.

It should be noted that when one electronic device 100 executes a data acquisition task initiated by another electronic device, it is equivalent to the first device in the following embodiments of the present disclosure, but when the electronic device 100 itself initiates a data acquisition task, it is equivalent to the second device in the following embodiments of the present disclosure. One or both of functions of executing the data acquisition task and initiating the data acquisition task can be integrated on one electronic device 100, and a plurality of electronic devices 100 can build a system for clock synchronization in human-machine-environment data acquisition as shown in FIG. 2 below.

FIG. 2 is a schematic structural diagram of a system for clock synchronization in human-machine-environment data acquisition according to an embodiment of the present disclosure. As shown in FIG. 2, the system for clock synchronization in human-machine-environment data acquisition can include: at least one first device 201, at least one data collector 202 connected to the at least one first device 201, at least one second device 203, and at least one data collector 204 connected to the at least one second device 203.

The at least one first device 201, the at least one data collector 202 connected to the at least one first device 201, the at least one second device 203, and the at least one data collector 204 connected to the at least one second device 203 are located in a same local area network.

During specific implementation, the first device 201 and the second device 203 can be implemented using a structure shown in FIG. 1. The above-mentioned data collectors include one or a combination of the following: a human-related data collector, a machine-related data collector, a human-machine interaction-related data collector, and an environment-related data collector. In an example, the above-mentioned data collectors can be various physiological signal acquisition sensors such as electroencephalogram, electrodermal, and/or heart rate sensors, or can be an eye tracker, an image or video sensor, a machine running speed sensor, a steering wheel and pedal mechanical sensor, a temperature sensor, or a humidity sensor, etc. Further, the above-mentioned data collectors can be a wearable, non-wearable, contact, non-contact sensor, or another types of data collectors. The type of the above-mentioned data collectors is not limited in the present disclosure.

In an embodiment, the above-mentioned data collectors can be configured to collect human-machine-environment data, and the human-machine-environment data can include one or a combination of the following: human-related data, machine-related data, human-machine interaction-related data, and environment-related data.

The human-related data include one or a combination of the following: skin electrodermal and temperature data, pulse data, blood pressure data, blood oxygen data, electrocardiogram data, electromyography data, muscle oxygen data, respiratory data, biomechanical data, near-infrared brain imaging data, electroencephalogram data, transcranial stimulation data, heart rate variability data, heart rate data, image/video data, sound data, eye-tracking data, gesture or motion data.

The machine-related data include one or a combination of the following: machine operation data, fault alarm data, machine manipulation data, machine model data, machine communication data, and machine positioning data.

The human-machine interaction-related data include one or a combination of the following: human-machine voice-interaction data, human-machine text-interaction data, human-machine touch-interaction data, human-machine gesture or action-interaction data, human-machine electroencephalogram-interaction data, human-machine eye-tracking-interaction data, and human-machine expression-interaction data.

The environment-related data include one or a combination of the following: location data, humidity data, temperature data, chromaticity data, brightness data, weather data, road condition data, traffic data, stimulus signal data, and event or signal marking data.

The above data are incomplete enumerations of various data that need to be obtained for human factors and ergonomics analysis. The human-machine-environment data can further include other data, and the embodiments of the present disclosure do not limit the human-machine-environment data.

It should be noted that FIG. 2 shows an example where the first device 201 and the data collector 202 are respectively two devices, but the embodiments of the present disclosure are not limited to this. The first device 201 and the data collector 202 may also be integrated into one device, that is, the first device 201 integrates the function of the data collector, and the first device 201 itself can perform the function of data acquisition. Similarly, the second device 203 and the data collector 204 may also be integrated into one device, that is, the second device 203 itself can perform the function of data acquisition.

In a system shown in FIG. 2, the first device 201 is responsible for monitoring and managing the data collector 202, and the second device 203 is responsible for monitoring and managing the data collector 204, so the first device 201 is a host computer of the data collector 202, and the second device 203 is a host computer of the data collector 204. It can be seen that the system shown in FIG. 2 can be regarded as a multi-host computer signal acquisition system in a local area network environment.

In the multi-host computer signal acquisition system within the local area network environment, the user operates the interface of a program process on one of the host computers (such as the second device 203) based on the business process, thereby starting a data acquisition task process. In the multi-host computer signal acquisition system, the host computer that initiates the acquisition task serves as a device for providing the calibration clock for the data related to the current acquisition task. In an embodiment, it is assumed that the user starts the acquisition task process on the second device 203, the second device 203 serves as the host computer that initiates the acquisition process, providing the calibration clock for the data related to the acquisition task.

The second device 203 continuously broadcasts information related to the current acquisition task to a specific user datagram protocol (UDP) port within the local area network, including an internet protocol (IP) address of an acquisition task initiating process, an NTP server port (default to 123 according to NTP), current NTP server time (denoted as t1), and the like. The UDP broadcast port can be configured through a configuration file, so as to ensure that all host computers are configured consistently during the deployment of the host computer software system.

The NTP server protocol is implemented on the second device 203, and the clock information of the host computer is designated as the calibration clock of the current acquisition task.

NTP is an application layer protocol based on UDP in a transmission control protocol (TCP)/IP protocol suite. In an embodiment, the second device 203 uses its clock information as a clock source, and only needs to provide a simplest NTP server for implementation. The implementation process may include: creating a UDP socket; receiving a request; processing the request and generating a response; and sending the response.

In step 1, a UDP socket is created and bound to a specified host and port (localhost and 123 port by default).

In step 2, an infinite loop is entered to wait for receiving an NTP request message from a NTP client.

In step 3, once starting to receive the NTP request message from the NTP client, the current system time t4 is recorded. After the NTP request message is received completely, the NTP client sending time t3 contained therein is obtained, and then the current system time t5 is obtained again.

The time t3, t4 and t5 are encapsulated into an NTP response message.

In step 4, the generated NTP response message is sent back to the NTP client.

In the multi-host computer signal acquisition system, differences between a NTP server implemented within a local area network environment and a public NTP server within an Internet environment may include but are not limited to the following: 1) selection of time source; and 2) access rights and security.

Within the Internet environment, the public NTP server usually uses a high-precision time source, such a GPS receiver or an atomic clock, to ensure accurate time services.

Within the local area network environment, the calibration clock is associated with a device node that initiates the acquisition task. Whichever device within the local area network initiates the acquisition task, the local clock of the device can be used as the time source for calibration when executing the acquisition task. Even if there is an offset between the time source and the Internet standard time, the clock synchronization requirement during the multi-host computer human-machine-environment signal acquisition process can be met.

Within the Internet environment, the public NTP server is open to all network users, and access control and security need to be considered to prevent malicious use and attacks.

Within the local area network environment, access is restricted to devices in the local area network, making the network environment more controllable. In scenarios with high requirements for security and confidentiality such as those involving secrets, military, and/or politics, a clock synchronization solution different from that in the Internet environment is required.

In an example, in the multi-host computer signal acquisition system within the local area network environment according to the embodiments of the present disclosure, the calibration clock is associated with the device node that initiates the acquisition task. Whichever device within the local area network initiates the acquisition task, the local clock of the device can be used as the calibration clock for the data related to the acquisition task when executing the acquisition task. In other words, the identification of the NTP server is related to the actual business process. In the business process, each host computer may serve as the initiating process of the acquisition process, and therefore each host computer may serve as the NTP server. Further, in the embodiments of the present disclosure, in order to avoid acquisition conflicts, a conflict avoidance mechanism similar to device exclusivity is introduced, that is, a device that initiates the acquisition task is the NTP server, and once the acquisition task is started, all devices are occupied, so that another acquisition task cannot be started on the same device at the same time, that is, a host computer can only participate in one acquisition task at the same moment.

Although due to device exclusivity, one device can only participate in one acquisition task at the same moment, different host computers within the same local area network may participate in different acquisition tasks, thereby implementing concurrent processing of system data acquisition and improving the efficiency of data acquisition and time synchronization. Assume that within a local area network, two groups of host computers start the acquisition process at the same time, for example, group A (host computer 1, host computer 2 and host computer 3) and group B (host computer 4 and host computer 5), where in group A, the host computer 1 initiates an acquisition task and broadcasts acquisition task information to the configured UDP port, and in group B, the host computer 4 initiates an acquisition task and broadcasts acquisition task information to the configured UDP port.

Assuming that the UDP broadcast ports configured by the two groups of host computers are the same, the host computer 2 and the host computer 3 in the group A, and the host computer 5 in the group B all receive two acquisition tasks. The host computer 2, the host computer 3, and the host computer 5 all display two acquisition tasks in the interface list, and the user can select to join one of the acquisition tasks. Once a host computer joins one acquisition task, the host computer cannot join another acquisition task at the same time due to device exclusivity, so that NTP time synchronization during the acquisition process cannot conflict.

In the multi-host computer signal acquisition system, the user starts other host computer processes based on the business process. These processes receive acquisition task information from the UDP broadcast port and display the acquisition task information on the interface. The user selects an acquisition task from the acquisition tasks displayed on the interface, to make the current host computer joins the acquisition task. These host computers are NTP clients. In an embodiment, the NTP client may be the first device 201 shown in FIG. 2.

In some embodiments, the NTP server (the second device 203) continuously performs UDP broadcasting, and the NTP client (the first device 201) receives the UDP broadcast, obtains NTP server information and the time t1 for sending a UDP broadcast message from the UDP broadcast, and records the current system time t2 of the first device 201. Then, after joining the acquisition task initiated by the second device 203 as selected by the user, the first device 201 requests a standard time from the second device 203. When sending the NTP request message, the first device 201 obtains the current system time t3 and encapsulates the current system time t3 into the NTP request message. After receiving the NTP response message sent by the second device 203, the first device 201 obtains the current system time t6, and calculates the time offset of the local device relative to the second device 203.

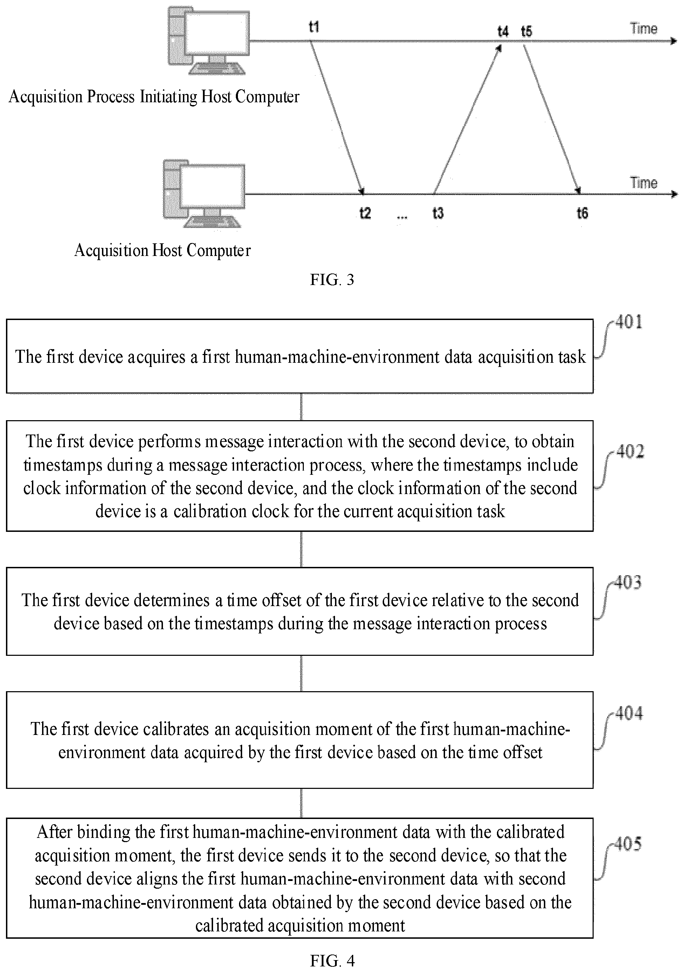

FIG. 3 is a schematic diagram of calculating a time offset according to an embodiment of the present disclosure. In FIG. 3, host computer that initiates an acquisition task may be the second device 203, and an acquisition host computer may be the first device 201. Various timestamp parameters in Fig. 3 are described below.

t1: a moment when the acquisition task initiating process sends a UDP broadcast each time;
t2: a moment when the first device 201 receives the UDP broadcast;
t3: a moment when the first device 201 sends a NTP request message after joining the acquisition task as selected by the user;
t4: a moment when the acquisition task initiating process (the second device 203) starts to receive the NTP request message;
t5: a moment when the second device 203 sends a NTP response message; and
t6: a moment when the first device 201 receives the NTP response message.

The first device 201 may calculate the time offset of the first device 201 relative to the second device 203 using four timestamp parameters among the above timestamp parameters.

First, the first device 201 calculates a round-trip delay (denoted as delay) of the NTP message from the first device 201 to the second device 203:

$$\text{delay} = (t6 - t3) - (t5 - t4) \qquad (1)$$

Second, the first device 201 calculates the time offset (denoted as offset) between the first device 201 and the second device 203.

In an example, the first device 201 can obtain the time offset based on the equation set (2), and the time offset can be shown as equation (3):

$$\begin{cases} t4 = t3 + \text{offset} + \dfrac{\text{delay}}{2} \\ t6 = t5 - \text{offset} + \dfrac{\text{delay}}{2} \end{cases} \qquad (2)$$

$$\text{offset} = \frac{(t4-t3)+(t5-t6)}{2} \qquad (3)$$

After obtain the time offset, the first device 201 can obtain the calibration moment based on the local moment and the time offset, as shown in equation (4):

$$t = t0 + \text{offset} \qquad (4)$$

In the equation (4), t is the calibration moment of the first device 201, and t0 is the local moment of the first device 201.

Next, during the data acquisition process, after obtaining the human-machine-environment data collected by the data collector 202, the first device 201 can calibrate the acquisition moment of the human-machine-environment data according to the equation (4) to obtain the calibration moment (i.e., the calibrated acquisition moment), and then the first device 201 binds the human-machine-environment data collected by the data collector 202 with the calibration moment. In some examples, the first device 201 can create a data table in a database for storing the human-machine-environment data, and the data table may be shown in Table 1. Each row of the data table represents the human-machine-environment data collected each time by the data collector 202 connected to the first device 201. For example, data column 1 in Table 1 can be human physiological data collected by the data collector 202, data column 2 can be machine operation data, data column 3 can be environmental data, etc. In addition to the human-machine-environment data collected by the data collector 202, the data table further includes two columns: local moment and calibration moment. The local moment is a local moment of the first device 201, or may be considered as a moment when the data collector 202 collects the human-machine-environment data, and the calibration moment is a moment after the first device 201 calibrates the local moment according to the equation (4). It can be seen from Table 1 that the local moment is different from the calibration moment in the data table of the first device 201.

Table 1

| First Device 201 | | | | | |
|---|---|---|---|---|---|
| Data Column 1 | Data Column 2 | Data Column 3 | ...... | Local Moment | Calibration Moment |
| x | x | x | ...... | Moment 1 | Moment 2 |
| x | x | x | ...... | Moment 3 | Moment 4 |

After binding the human-machine-environment data collected by the data collector 202 with the calibration moment, the first device 201 sends it to the second device 203. In other words, the first device 201 can send the Table 1 to the second device 203. During a process in which the first device 201 executes the acquisition task, the second device 203 is also executing the data acquisition task. After obtaining the human-machine-environment data collected by the data collector 204, the second device 203 can store the human-machine-environment data collected by the data collector 204 in the same manner as Table 1, as shown in Table 2.

Table 2

| Second Device 203 | | | | | |
|---|---|---|---|---|---|
| Data Column 1 | Data Column 2 | Data Column 3 | ...... | Local Moment | Calibration Moment |
| x | x | x | ...... | Moment 5 | Moment 5 |
| x | x | x | ...... | Moment 6 | Moment 6 |

Compared with Table 1, the difference is that the second device 203 is an initiating device of the acquisition task. Therefore, in the acquisition system shown in FIG. 2, the clock information of the second device 203 is used as a calibration clock of the current acquisition task, so that in the data table of the second device 203, the local moment is the same as the calibration moment.

After the acquisition task is completed, the second device 203 aligns and replays the human-machine-environment data in the table 1 sent by the first device 201 with the human-machine-environment data in the table 2. In an example, the second device 203 can align the human-machine-environment data in Table 1 with the human-machine-environment data in Table 2 according to the calibration moment in Table 1 and the calibration moment in Table 2, so that human-machine-environment data with the same calibration moment are human-machine-environment data collected at the same moment.

After aligning the human-machine-environment data in Table 1 with the human-machine-environment data in Table 2, the second device 203 can further replay the human-machine-environment data collected by the current acquisition task. When replaying the human-machine-environment data, the second device 203 can display the human-machine-environment data with the same calibration moment at the same moment.

In the description of the above embodiments, the second device 203 is taken as the NTP server and the first device 201 is taken as the NTP client for illustration. However, in the system for clock synchronization in human-machine-environment data acquisition according to an embodiment of the present disclosure, different devices can be understood as peer nodes, without a concept of client-server (CS). That is to say, in the system for clock synchronization in human-machine-environment data acquisition, any electronic device can initiate a human-machine-environment data acquisition task, and then other electronic devices and/or data collectors connected to the initiating electronic device use the clock information of the initiating electronic device as the calibration clock for the human-machine-environment data acquisition task to execute the human-machine-environment data acquisition task. Any electronic device initiates the human-machine-environment data acquisition task, including the following situations: after completing other human-machine-environment data acquisition tasks initiated by the other electronic devices, any electronic device initiates the human-machine-environment data acquisition task, where when executing the other human-machine-environment data acquisition tasks, any electronic device uses clock information of the other electronic device as a calibration clock; or in response to no human-machine-environment data acquisition task currently being executed within the local area network, any electronic device initiates the human-machine-environment data acquisition task.

In simple terms, in the system for clock synchronization in human-machine-environment data acquisition according to an embodiment of the present disclosure, the same device can be an initiator of a data acquisition task at some moments, serving as the second device 203 in the above embodiments. The device can also be an executor of a data acquisition task initiated by other devices at other moments, serving as the first device 201 in the above embodiments. Therefore, clock synchronization based on the granularity of the acquisition task can be flexibly implemented according to the acquisition task in a multi-device environment built based on the local area network.

The following describes an example of executing the human-machine-environment data acquisition task using the system shown in FIG. 2.

In this example, an operator can designate the second device 203 in the system shown in FIG. 2 is an NTP server and the first device 201 as an NTP client, to implement clock synchronization of multi-host computers. In virtual reality and simulation environments as well as various complex natural environments or real conditions, the first device 201 and the second device 203 can synchronously record the user's multimodal data changes such as psychological, physiological, and behavioral data in real time. Using the recorded data, the second device 203 can synchronously analyze the user's behavioral performance, cognitive load, fatigue, and/or emotional arousal and other states.

In this example, the second device 203 is a main operating device of the user, and the data collector 204 connected to the second device 203 can be an eye tracker. The eye tracker collects eye-tracking data of the user in real time during an experiment. After obtaining the eye-tracking data collected by the eye tracker, the second device 203 records the eye-tracking data, which can be used to analyze the operator's physiological state such as behavioral performance and/or attention.

The data collector 202 connected to the first device 201 can be a sensor device such as a physiological bracelet and/or an ear clip. The sensor device such as the physiological bracelet and/or the ear clip collects a physiological signal of the user in real time during the experiment. After obtaining the physiological signal collected by the sensor device such as the physiological bracelet and/or the ear clip, the first device 201 records the physiological signal, which can be used to analyze the user's physiological state such as cognitive load, fatigue, and/or emotional arousal.

After the second device 203 is started, the user creates and starts a human-machine-environment data acquisition task in a process of the second device 203. At this time, the second device 203, as an NTP server, broadcasts information about the acquisition task to the configured UDP port. The information about the acquisition task can include an acquisition task initiating process IP and an NTP server port (123 by default according to the NTP protocol).

After being started, the first device 201 continuously monitors the configured UDP port, receives the broadcast signal, obtains the information of the NTP server from the broadcast signal, and displays at least one received acquisition task in the interface list. Then, the user selects the acquisition task that the first device 201 joins according to the information about the NTP server in the process interface of the first device 201, and then the user clicks the selected acquisition task, to make the first device 201 join the selected acquisition task. Next, after sending the NTP request message to the second device 203 according to the obtained information of the NTP server, and receiving the NTP response message sent back by the second device 203, the first device 201 may calculate a time offset of the first device 201 relative to the second device 203 according to the formula (3), and a detailed process of calculating the time offset may refer to the description of the embodiments shown in FIG. 3, which will not be repeated herein.

After obtaining the time offset, the first device 201 can calibrate an acquisition moment of the physiological signal collected by the sensor device such as the physiological bracelet and/or the ear clip according to the time offset to obtain a calibration moment. Then, the first device 201 binds the physiological signal with the calibration moment. For example, the physiological signal and the calibration moment are recorded in the data table shown in Table 1, and then the recorded data table is sent to the second device 203.

After obtaining the eye-tracking data collected by the eye tracker, the second device 203 can record the eye-tracking data into the data table shown in Table 2. When recording the eye-tracking data into the data table shown in Table 2, the second device 203 directly stores the local moment in the calibration moment column.

After the acquisition task is completed, the second device 203 can align and analyze the data according to the calibration moment columns of the two data tables, and replay the data.

As described above, an embodiment of the present disclosure provides a method for clock synchronization in human-machine-environment data acquisition, and FIG. 4 is a flowchart of a method for clock synchronization in human-machine-environment data acquisition according to an embodiment of the present disclosure. The method according to an embodiment can be applied to the first device 201 in the system shown in FIG. 2. As shown in FIG. 4, the method for clock synchronization in human-machine-environment data acquisition can include the following step.

Step 401, the first device 201 acquires a first human-machine-environment data acquisition task.

The first human-machine-environment data acquisition task is initiated by the second device 203 within the local area network where the second device 203 is located, and the second device 203 and the first device 201 are located in the same local area network.

In an example, the first device 201 acquires a first human-machine-environment data acquisition task, including: the first device 201 acquires the first human-machine-environment data acquisition task broadcast by the second device 203 within the local area network; or the first device 201 receives the first human-machine-environment data acquisition task sent by the second device 203 through the local area network.

In other words, the first device 201 can monitor the configured broadcast port to obtain the first human-machine-environment data acquisition task broadcast by the second device 203 within the local area network; or the second device 203 can directly send the first human-machine-environment data acquisition task to the first device 201, and the first device 201 receives the first human-machine-environment data acquisition task sent by the second device 203 through the local area network.

Step 402, the first device 201 performs message interaction with the second device 203, to obtain timestamps during a message interaction process.

The timestamps includes clock information of the second device 203, and the clock information of the second device 203 is a calibration clock for the current acquisition task.

In an example, the first device 201 acquires a first human-machine-environment data acquisition task, including: the first device 201 acquires at least two first human-machine-environment data acquisition tasks, where the at least two first human-machine-environment data acquisition tasks are respectively initiated by different second devices 203 within the local area network, and each first human-machine-environment data acquisition task carries an initiating process identifier thereof and a clock synchronization server port of the corresponding second device 203.

In this way, the first device 201 performs message interaction with the second device 203, including: the first device 201 determines a second human-machine-environment data acquisition task to be joined by the first device 201 among the at least two first human-machine-environment data acquisition tasks according to the initiating process identifier and the clock synchronization server port carried by each first human-machine-environment data acquisition task; and the first device 201 performs message interaction with the second device 203 that initiates the second human-machine-environment data acquisition task.

In other words, the first device 201 may receive at least two first human-machine-environment data acquisition tasks. The first device 201 can determine the second human-machine-environment data acquisition task to be joined by the first device 201 based on the initiating process identifier and the clock synchronization server port. However, due to the exclusivity of the device, the first device 201 can only participate in one human-machine-environment data acquisition task at the same moment. After determining that the first device 201 needs to join the second human-machine-environment data acquisition task, the first device 201 can perform message interaction with the second device 203 that initiates the second human-machine-environment data acquisition task.

During specific implementation, in data acquisition scenarios for human factors and ergonomics analysis, a plurality of devices (i.e., host computers, such as mobile phone and/or PC) within the local area network can respectively broadcast the human-machine-environment data acquisition tasks. That is, there may be multiple human-machine-environment data acquisition tasks within the local area network at the same time. The user of the device that initiates the acquisition task is usually a leader of the acquisition task, which is called an experimenter, and the user of the device that listens to the acquisition task is usually a test subject, which is called a subject. Each acquisition task usually includes one experimenter, and one or more subjects. Different acquisition tasks can have different experimenters and different subjects. The subjects can input whether to join and which data acquisition task to join on the device used by the subjects according to the preparation status of the data collectors they wear or need to prepare (such as bracelets, EEG caps, eye trackers and/or cameras, etc.). After the data acquisition task is initiated, the confirmation right of whether to join the data acquisition task and which specific data acquisition task to join is given to the subject, which is conducive to ensuring the effectiveness and accuracy of data acquisition.

Step 403, the first device 201 determines a time offset of the first device 201 relative to the second device 203 based on the timestamps during the message interaction process.

In an embodiment, the first device 201 performs message interaction with the second device 203 to obtain timestamps during a message interaction process, including: the first device 201 sends a clock synchronization request message to the second device 203, where the clock synchronization request message carries a first timestamp, and the first timestamp is a moment when the first device 201 sends the clock synchronization request message; and the first device 201 receives a clock synchronization response message sent by the second device 203, and obtains a second timestamp, where the second timestamp is a moment when the first device 201 receives the clock synchronization response message, the clock synchronization response message carries a third timestamp and a fourth timestamp, the third timestamp is a moment when the second device 203 starts to receive the clock synchronization request message, and the fourth timestamp is a moment when the second device 203 sends the clock synchronization response message.

In this way, the first device 201 can determine the time offset of the first device 201 relative to the second device 203 based on the first timestamp, the second timestamp, the third timestamp, and the fourth timestamp. A specific manner in which the first device 201 determines the time offset can be shown in the equation (3), which will not be repeated herein.

The clock synchronization request message may be an NTP request message, and the clock synchronization response message may be an NTP response message.

Step 404, the first device 201 calibrates an acquisition moment of the first human-machine-environment data acquired by the first device 201 based on the time offset.

The first human-machine-environment data may be collected by the first device 201 and/or at least one data collector connected to the first device 201, and the data collector is configured to collect human-related data, machine-related data, and/or environment-related data.

In other words, the first device 201 and the data collector can be two devices that are arranged separately, or can be integrated into one device, that is, the first device 201 integrates a function of the data collector, and the first device 201 itself can complete the function of data acquisition.

Step 405, after binding the first human-machine-environment data with the calibrated acquisition moment, the first device 201 sends the first human-machine-environment data to the second device 203, so that the second device 203 aligns the first human-machine-environment data with second human-machine-environment data obtained by the second device 203 based on the calibrated acquisition moment.

In some examples, after the execution of the first human-machine-environment data acquisition task is completed, the first device 201 can further initiate a third human-machine-environment data acquisition task within the local area network that uses the clock information of the first device 201 as the calibration clock. That is, after the execution of the first human-machine-environment data acquisition task is completed, the first device 201 can initiate a new third human-machine-environment data acquisition task, so that the first device 201 serves as a clock synchronization server, and the third human-machine-environment data acquisition task uses the clock information of the first device 201 as the calibration moment.

The first device 201 determines that the execution of the first human-machine-environment data acquisition task is completed, including: the first device 201 determines that the execution of the first human-machine-environment data acquisition task is completed by listening to the broadcast. In an example, if the first device 201 does not listen to a broadcast instruction of the second device 203 about the first human-machine-environment data acquisition task within a preset duration, the first device 201 determines that the task is ended. Alternatively, the second device 203 actively broadcasts to inform the first device 201 that the execution of the first human-machine-environment data acquisition task is completed. In an example, the second device 203 broadcasts an end instruction of first human-machine-environment data acquisition task within the local area network when determining that the first human-machine-environment data acquisition task is to be ended, and after obtaining the end instruction, the first device 201 determines that the first human-machine-environment data acquisition task is completed, thereby facilitating the initiation of other acquisition tasks within the local area network.

In some other examples, in response to no human-machine-environment data acquisition task currently being executed within the local area network, the first device 201 initiates a third human-machine-environment data acquisition task within the local area network that uses the clock information of the first device 201 as the calibration clock.

In the method for clock synchronization in human-machine-environment data acquisition, after acquiring the first human-machine-environment data acquisition task, the first device 201 performs message interaction with the second device 203, to obtain timestamps during the message interaction process. The timestamps include clock information of the second device 203, and the clock information of the second device 203 is a calibration clock of the current acquisition task. Then, the first device 201 determines a time offset of the first device 201 relative to the second device 203 according to the timestamps during the message interaction process, and calibrates the acquisition moment of the first human-machine-environment data acquired by the first device 201 according to the time offset, thereby realizing clock synchronization among devices within the local area network environment, avoiding the dependence of clock synchronization on the Internet, and improving the accuracy and stability of clock synchronization. Finally, after binding the first human-machine-environment data with the calibrated acquisition moment, the first device 201 sends the first human-machine-environment data to the second device 203. In this way, the second device 203 can align the first human-machine-environment data with the second human-machine-environment data acquired by the second device 203 according to the above calibrated acquisition moment, thereby aligning human-machine-environment data collected by different data collectors according to the calibration moment, and facilitating human factors and ergonomics analysis on factors such as humans, machines, human-machine interactions, and environments.

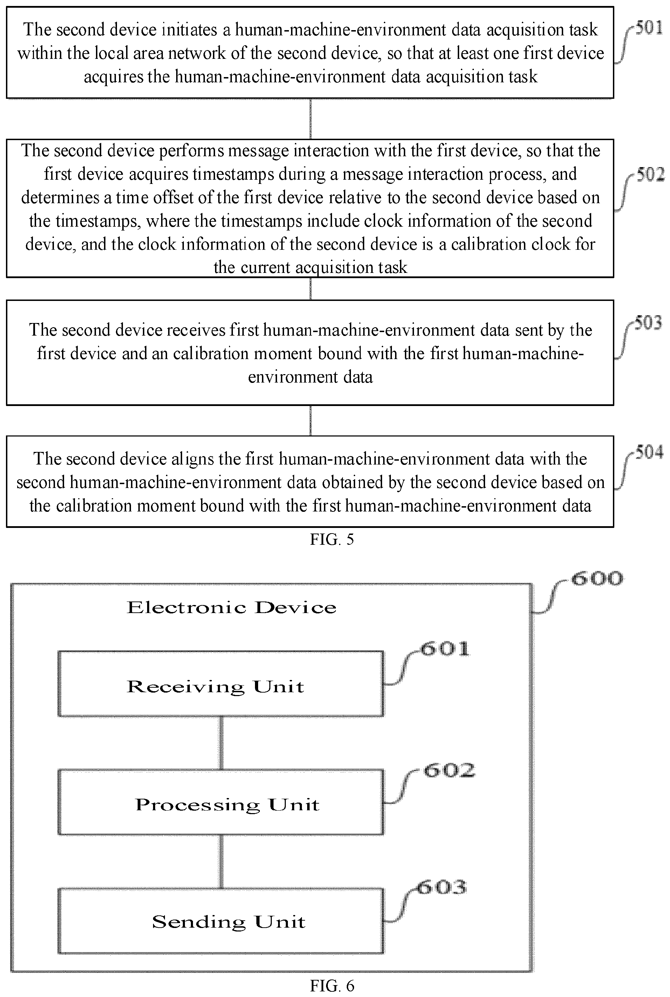

FIG. 5 is a method for clock synchronization in human-machine-environment data acquisition according to another embodiment of the present disclosure, and the method provided in the embodiments of the present disclosure can be applied to the second device 203 in the system shown in FIG. 2. As shown in FIG. 5, the method for clock synchronization in human-machine-environment data acquisition can include the following steps.

Step 501, the second device 203 initiates a human-machine-environment data acquisition task within the local area network where the second device 203 is located, so that at least one first device 201 can acquire the human-machine-environment data acquisition task.

The first device 201 and the second device 203 are located in the same local area network.

In some examples, the second device 203 initiates a human-machine-environment data acquisition task within the local area network where the second device 203 is located, so that at least one first device 201 can acquire the human-machine-environment data acquisition task, including: the second device 203 broadcasts the human-machine-environment data acquisition task within the local area network; or the second device 203 can send the human-machine-environment data acquisition task to the at least one first device 201 through the local area network.

In an embodiment, before initiating the human-machine-environment data acquisition task, the second device 203 may further create a socket (for example: a UDP socket) and bind the socket to the clock synchronization server port (such as a port 123) of the second device 203. In this way, the human-machine-environment data acquisition task initiated by the second device 203 carries an initiating process identifier of the acquisition task and a clock synchronization server port of the second device 203.

Step 502, the second device 203 performs message interaction with the first device 201, so that the first device 201 can obtain timestamps during a message interaction process, and determines a time offset of the first device 201 relative to the second device 203 based on the timestamps.

The timestamps include clock information of the second device 203, and the clock information of the second device 203 is a calibration clock for the current acquisition task.

Step 503, the second device 203 receives the first human-machine-environment data sent by the first device 201 and the calibration moment bound with the first human-machine-environment data.

The first human-machine-environment data is collected by the first device and/or at least one data collector connected to the first device, and the at least one data collector is configured to collect human-body related data, machine-related data, and/or environment-related data. The calibration moment bound with the first human-machine-environment data is a moment after the first device 201 calibrates the acquisition moment of the first human-machine-environment data acquired by the first device 201 based on the time offset.

Step 504, the second device 203 aligns the first human-machine-environment data with the second human-machine-environment data obtained by the second device 203 based on the calibration moment bound with the first human-machine-environment data.

The second human-machine-environment data is collected by the second device 203 and/or at least one data collector connected to the second device 203. That is, the second device 203 and the data collector can be two devices that are arranged separately, or can be integrated into one device, that is, the second device 203 integrates a function of the data collector, and the second device 203 can complete the function of data acquisition.

In an embodiment, before aligning the first human-machine-environment data with the second human-machine-environment data obtained by the second device 203, the second device 203 may further receive an acquisition moment of the first human-machine-environment data sent by the first device 201, and obtain the second human-machine-environment data, an acquisition moment of the second human-machine-environment data, and a calibration moment bound with the second human-machine-environment data. The acquisition moment of the second human-machine-environment data and the calibration moment of the second human-machine-environment data are the same. In an example, the first device 201 can record the first human-machine-environment data, and the acquisition moment and calibration moment of the first human-machine-environment data into a data table, and then send the data table to the second device 203. The data table recorded by the first device 201 can be shown in Table 1. Similarly, the second device 203 can also record the second human-machine-environment data, and the acquisition moment and calibration moment of the second human-machine-environment data into a data table, and the data table recorded by the second device can be shown in Table 2.

In an example, the second device 203 aligns the first human-machine-environment data with the second human-machine-environment data obtained by the second device 203 based on the calibration moment bound with the first human-machine-environment data, including: the second device 203 aligns the first human-machine-environment data with the second human-machine-environment data based on the calibration moment bound with the first human-machine-environment data and the calibration moment bound with the second human-machine-environment data.

In some examples, after aligning the first human-machine-environment data with the second human-machine-environment data, the second device 203 can further display the first human-machine-environment data and the second human-machine-environment data that have the same calibration moment at the same time.

According to the method for clock synchronization in human-machine-environment data acquisition, the second device 203 initiates a human-machine-environment data acquisition task within the local area network where the second device 203 is located, so that at least one first device 201 can acquire the human-machine-environment data acquisition task. Then, the second device 203 performs message interaction with the first device, so that the first device 201 obtains the timestamps during the message interaction process, and determines the time offset of the first device 201 relative to the second device 203 according to the timestamps, thereby realizing clock synchronization among devices within the local area network environment, avoiding the dependence of clock synchronization on the Internet, and improving the accuracy and stability of clock synchronization. After that, the second device 203 receives the first human-machine-environment data sent by the first device 201, and the acquisition calibration moment bound with the first human-machine-environment data. The second device 203 aligns the first human-machine-environment data with the second human-machine-environment data acquired by the second device 203 according to the acquisition calibration moment bound with the first human-machine-environment data, thereby aligning human-machine-environment data collected by different data collectors according to the calibration moment, and facilitating human factors and ergonomics analysis on factors such as humans, machines, human-machine interactions, and environments.

It can be understood that some or all of the steps or operations in the above embodiments are merely examples, and other operations or variations of various operations can also be performed in the embodiments of the present disclosure. Further, each step may be executed in a different order from that presented in the above embodiments, and it may not be necessary to execute all operations in the above embodiments.

It can be understood that, to implement the above-mentioned functions, the electronic device includes corresponding hardware and/or software modules for executing each function. With reference to algorithm steps of each example described in the embodiments disclosed in the present disclosure, the present disclosure can be implemented in a form of hardware or a combination of hardware and computer software. Whether a function is executed by hardware or by computer software driving hardware depends on the specific application and design constraints of the technical solution. Those skilled in the art may use different methods to implement the described functions for each specific application in conjunction with the embodiments, but such implementation should not be considered beyond a scope of the present disclosure.

In an embodiment, functional modules of the electronic device can be divided according to the above-mentioned method embodiments. For example, each functional module can be divided corresponding to each function, or two or more functions can be integrated into one module. The integrated module can be implemented in a form of hardware. It should be noted that the division of modules in the embodiments of present disclosure is exemplary, and is merely a logical function division. There may be other division manners in actual implementation.

FIG. 6 is a schematic structural diagram of an electronic device according to another embodiment of the present disclosure. In the case where each functional module is divided corresponding to each function, FIG. 6 shows a possible composition schematic diagram of the electronic device 600 involved in the above-mentioned embodiments. As shown in FIG. 6, the electronic device 600 can include: a receiving unit 601, a processing unit 602, and a sending unit 603.

It should be noted that when the same electronic device 600 executes a data acquisition task initiated by other electronic devices, it is equivalent to the first device in the above embodiments, but when the electronic device 600 itself initiates a data acquisition task, it is equivalent to the second device in the above embodiments. One or both of functions of initiating a data acquisition task and executing a data acquisition task can be integrated on one electronic device 600, and a plurality of electronic devices 600 can build the system for clock synchronization in human-machine-environment data acquisition shown in FIG. 2.

When the electronic device 600 is equivalent to the first device in the above embodiments, the receiving unit 601 can be configured to support the electronic device 600 in executing step 401 and step 402, and/or can be used for other processes of the technical solution described in the embodiments of the present disclosure.

The processing unit 602 can be configured to support the electronic device 600 in executing step 402, step 403, and step 404, and/or can be used for other processes of the technical solution described in the embodiments of the present disclosure.

The sending unit 603 can be configured to support the electronic device 600 in performing step 405, and/or can be used for other processes of the technical solution described in the embodiments of the present disclosure.

When the electronic device 600 is equivalent to the first device in the above embodiments, all relevant contents of each step involved in the method embodiment shown in FIG. 4 in the present disclosure can be referred to in the functional description of a corresponding function module, which will not be repeated herein.

When the electronic device 600 is equivalent to the second device in the above embodiments, the receiving unit 601 can be configured to support the electronic device 600 in executing step 501 and step 503, and/or can be used for other processes of the technical solution described in the embodiments of the present disclosure.

The processing unit 602 can be configured to support the electronic device 600 in executing step 502 and step 504, and/or can be used for other processes of the technical solution described in the embodiments of the present disclosure.

The sending unit 603 can be configured to support the electronic device 600 in executing step 501 and step 502, and/or can be used for other processes of the technical solution described in the embodiments of the present disclosure.

When the electronic device 600 is equivalent to the second device in the above embodiments, all relevant contents of each step involved in the method embodiment shown in FIG. 5 in the present disclosure can be referred to in the functional description of a corresponding function module, which will not be repeated herein.

The electronic device 600 provided in the embodiments of the present disclosure is configured to execute the method for clock synchronization in human-machine-environment data acquisition provided in the embodiments shown in FIG. 4 or FIG. 5 of the present disclosure, so that the same effect as the above-mentioned method can be achieved.

It should be understood that the electronic device 600 may correspond to the electronic device 100 shown in FIG. 1. Functions of the receiving unit 601 and the sending unit 603 can be implemented by the processor 110 and the communication interface 120 in the electronic device 100 shown in FIG. 1. Functions of the processing unit 602 can be implemented by the processor 110 in the electronic device 100 shown in FIG. 1.

When using an integrated unit, the electronic device 600 may include a processing module, a storage module, and a communication module.

The processing module can be configured to control and manage operations of the electronic device 600, for example, can be configured to support the electronic device 600 in executing the steps executed by the receiving unit 601, the processing unit 602, and the sending unit 603. The storage module can be configured to support the electronic device 600 in storing program codes, data, and the like. The communication module can be configured to support communication between the electronic device 600 and other devices.

The processing module may be a processor or a controller, which can implement or execute various exemplary logical blocks, modules, and circuits described in the present disclosure. The processor may also be a combination that implements a computing function, for example, a combination of one or more microprocessors, or a combination of a digital signal processing (DSP) and a microprocessor. The storage module may be a memory. The communication module may specifically be a device that interacts with other electronic devices, such as a radio frequency circuit, a Bluetooth chip, and/or a Wi-Fi chip.

In an embodiment, when the processing module is a processor and the storage module is a memory, the electronic device 600 in the embodiments of the present disclosure may be a device having a structure shown in FIG. 1.

An embodiment of the present disclosure further provides a computer-readable storage medium on which a computer program is stored. The computer program, when running on a computer, is configured to enable the compute to implement the method provided in the embodiments shown in FIG. 4 or FIG. 5 of the present disclosure.

An embodiment of the present disclosure further provides a computer program product, which includes a computer program. The computer program, when running on a computer, is configured to enable the computer to implement the method provided in the embodiments shown in FIG. 4 or FIG. 5 in the present disclosure.

In the embodiments of the present disclosure, "at least one" refers to one or more, and "a plurality of" refers to two or more. It should be understood that the term "and/or" describes an associated relationship of an associated object, indicating that there may be three relationships, for example, A and/or B, and may indicate: only A, both A and B, and only B, where A and B may be singular or plural. The character "/" herein generally indicates an "or" relationship between associated objects. "At least one of the following" and similar expressions thereof refer to any combination of these items, including any combination of a single item or plural items. For example, at least one of a, b, and c may represent: a combination of a, b, and c, a combination of a and b, a combination of a and c, a combination of b and c, a, b and c, where a, b, and c may be single or multiple.

Those skilled in the art may recognize that the units and algorithm steps described in the embodiments disclosed herein can be implemented using electronic hardware, and a combination of electronic hardware and computer software. Whether these functions are executed in hardware or software depends on the specific application and design constraints of the technical solution. Those skilled in the art may use different methods to implement the described functions for each specific application, but such implementation should not be considered to be beyond the scope of the present disclosure.

Those skilled in the art can clearly understand that, for convenience and conciseness of description, the specific operating process of the above-described system, the device and the unit can refer to the corresponding process in the above method embodiments, which will not be repeated herein.

In some embodiments provided in the present disclosure, if any function is implemented in a form of a software function unit and sold or used as an independent product, the function may be stored in a computer-readable storage medium. Based on such understanding, the technical solution of this application, in essence, the part that contributes to the prior art or a portion of this technical solution, may be embodied in the form of a software product. The computer software product is stored in the storage medium and includes some instructions for enabling a computer device, which may be a personal computer, a server, or a network device, etc., to execute all or some of the steps of the method described in each embodiment of the present disclosure. The aforementioned storage medium includes: U disk, mobile hard disk, read-only memory (ROM), random access memory (RAM), magnetic disk or optical disk and other media that can store program codes.

The above descriptions are merely specific implementations of the present disclosure. Any person skilled in the art can easily think of changes or substitutions within the technical scope disclosed in the present disclosure, and they should be covered within the protection scope of the present disclosure. The protection scope of the present disclosure should be based on the protection scope of the claims.

**Claims**

1.  A method for clock synchronization in human-machine-environment data acquisition, executed by a first device, comprising:

    acquiring a first human-machine-environment data acquisition task, wherein the first human-machine-environment data acquisition task is initiated by a second device within a local area network of the second device, and the second device and the first device are located in a same local area network;
    performing message interaction with the second device to obtain timestamps during a message interaction process, wherein the timestamps comprise clock information of the second device, and the clock information of the second device is a calibration clock for a current acquisition task;
    determining a time offset of the first device relative to the second device based on the timestamps during the message interaction process;
    calibrating an acquisition moment of first human-machine-environment data acquired by the first device according to the time offset, wherein the first human-machine-environment data is collected by the first device and/or at least one data collector connected to the first device, and the at least one data collector is configured to collect human-related data, machine-related data, human-machine interaction-related data, and/or environment-related data; and
    sending the first human-machine-environment data bound with the calibrated acquisition moment to the second device, so that the second device aligns the first human-machine-environment data with second human-machine-environment data acquired by the second device based on the calibrated acquisition moment.

2.  The method according to claim 1, wherein said performing message interaction with the second device to obtain timestamps during a message interaction process comprises:

    sending a clock synchronization request message to the second device, wherein the clock synchronization request message carries a first timestamp, and the first timestamp is a moment when the first device sends the clock synchronization request message; and
    receiving a clock synchronization response message sent by the second device, and obtaining a second timestamp, wherein the second timestamp is a moment when the first device receives the clock synchronization response message, the clock synchronization response message carries a third timestamp and a fourth timestamp, the third timestamp is a moment when the second device starts to receive the clock synchronization request message, and the fourth timestamp is a moment when the second device sends the clock synchronization response message.

3.  The method according to claim 2, wherein said determining a time offset of the first device relative to the second device based on the timestamps during the message interaction process comprises:
    determining the time offset of the first device relative to the second device based on the first timestamp, the second timestamp, the third timestamp, and the fourth timestamp.

4. The method according to claim 1, wherein said acquiring a first human-machine-environment data acquisition task comprises:
acquiring at least two first human-machine-environment data acquisition tasks, wherein the at least two first human-machine-environment data acquisition tasks are respectively initiated by different second devices within the local area network, and each of the at least two first human-machine-environment data acquisition tasks carries an initiating process identifier thereof and a clock synchronization server port of a corresponding second device.

5. The method according to claim 4, wherein said performing message interaction with the second device comprises:

determining a second human-machine-environment data acquisition task to be joined by the first device among the at least two first human-machine-environment data acquisition tasks based on the initiating process identifier and the clock synchronization server port that are carried by each of the at least two first human-machine-environment data acquisition tasks; and
performing the message interaction with the second device that initiates the second human-machine-environment data acquisition task.

6. The method according to any one of claims 1 to 5, wherein said acquiring a first human-machine-environment data acquisition task comprises:

acquiring the first human-machine-environment data acquisition task broadcast by the second device within the local area network; or
receiving the first human-machine-environment data acquisition task sent by the second device through the local area network.

7. The method according to any one of claims 1 to 5, further comprising:

after the execution of the first human-machine-environment data acquisition task is completed, initiating a third human-machine-environment data acquisition task within the local area network, wherein the third human-machine-environment data acquisition task uses clock information of the first device as a calibration clock; or
in response to no human-machine-environment data acquisition task currently being executed within the local area network, initiating a third human-machine-environment data acquisition task within the local area network, wherein the third human-machine-environment data acquisition task uses clock information of the first device as a calibration clock.

8. The method according to any one of claims 1 to 5, wherein the data collector comprises one or a combination of: a human-related data collector, a machine-related data collector, a human-machine interaction-related data collector, and an environment-related data collector;

the human-related data comprise one or a combination of: skin electrodermal and temperature data, pulse data, blood pressure data, blood oxygen data, electrocardiogram data, electromyography data, muscle oxygen data, respiratory data, biomechanical data, near-infrared brain imaging data, electroencephalogram data, transcranial stimulation data, heart rate variability data, heart rate data, image/video data, sound data, eye-tracking data, gesture or motion data;
the machine-related data comprise one or a combination of: machine operation data, fault alarm data, machine manipulation data, machine model data, machine communication data, and machine positioning data;
the human-machine interaction-related data comprise one or a combination of: human-machine voice-interaction data, human-machine text-interaction data, human-machine touch-interaction data, human-machine gesture or action-interaction data, human-machine electroencephalogram-interaction data, human-machine eye-tracking-interaction data, and human-machine expression-interaction data; and
the environment-related data comprise one or a combination of: location data, humidity data, temperature data, chromaticity data, brightness data, weather data, road condition data, traffic data, stimulus signal data, and event or signal marking data.

9. A method for clock synchronization in human-machine-environment data acquisition, executed by a second device, comprising:

initiating a human-machine-environment data acquisition task within a local area network of the second device, so that at least one first device acquires the human-machine-environment data acquisition task, wherein the at least one first device and the second device are located in a same local area network;

performing message interaction with the at least one first device, so that the at least one first device obtains timestamps during a message interaction process, and determines a time offset of the at least one first device relative to the second device based on the timestamps, wherein the timestamps comprise clock information of the second device, and the clock information of the second device is a calibration clock for a current acquisition task;

receiving first human-machine-environment data and a calibration moment bound with the first human-machine-environment data sent by the at least one first device, wherein the first human-machine-environment data is collected by the at least one first device and/or at least one data collector connected to the at least one first device, the at least one data collector is configured to collect human-related data, machine-related data, and/or environment-related data, and the calibration moment bound with the first human-machine-environment data is a moment obtained by the at least one first device calibrating an acquisition moment of the first human-machine-environment data acquired by the at least one first device based on the time offset; and

aligning the first human-machine-environment data with second human-machine-environment data acquired by the second device based on the calibration moment bound with the first human-machine-environment data, wherein the second human-machine-environment data is collected by the second device and/or at least one data collector connected to the second device.

10. The method according to claim 9, wherein said initiating a human-machine-environment data acquisition task within a local area network of the second device, so that at least one first device acquires the human-machine-environment data acquisition task comprises:

broadcasting the human-machine-environment data acquisition task within the local area network; or
sending the human-machine-environment data acquisition task to the at least one first device through the local area network.

11. The method according to claim 9 or 10, further comprising:

creating a socket; and
binding the socket to a clock synchronization server port of the second device;
wherein the human-machine-environment data acquisition task initiated by the second device carries an initiating process identifier of the human-machine-environment data acquisition task and the clock synchronization server port of the second device.

12. The method according to claim 9 or 10, wherein before said aligning the first human-machine-environment data with second human-machine-environment data acquired by the second device based on the calibration moment bound with the first human-machine-environment data, the method further comprises:

receiving an acquisition moment of the first human-machine-environment data sent by the at least one first device; and
acquiring the second human-machine-environment data, an acquisition moment of the second human-machine-environment data, and a calibration moment bound with the second human-machine-environment data, wherein the acquisition moment of the second human-machine-environment data is the same as the calibration moment of the second human-machine-environment data.

13. The method according to claim 12, wherein said aligning the first human-machine-environment data with second human-machine-environment data acquired by the second device based on the calibration moment bound with the first human-machine-environment data comprises:
aligning the first human-machine-environment data with the second human-machine-environment data based on the calibration moment bound with the first human-machine-environment data and the calibration moment bound with the second human-machine-environment data.

14. The method according to claim 13, wherein after said aligning the first human-machine-environment data with the second human-machine-environment data, the method further comprises:
displaying the first human-machine-environment data and the second human-machine-environment data with a same calibration moment at a same moment.

15. An electronic device, comprising:

one or more processors;

a memory;

a plurality of application programs; and

one or more computer programs, wherein the one or more computer programs are stored in the memory and comprise instructions that, when executed by the electronic device, enable the electronic device to implement the method according to any one of claims 1 to 8 or any one of claims 9 to 14.

FIG. 1

FIG. 2

Acquisition Process Initiating Host Computer

Acquisition Host Computer

FIG. 3

The first device acquires a first human-machine-environment data acquisition task — 401

The first device performs message interaction with the second device, to obtain timestamps during a message interaction process, where the timestamps include clock information of the second device, and the clock information of the second device is a calibration clock for the current acquisition task — 402

The first device determines a time offset of the first device relative to the second device based on the timestamps during the message interaction process — 403

The first device calibrates an acquisition moment of the first human-machine-environment data acquired by the first device based on the time offset — 404

After binding the first human-machine-environment data with the calibrated acquisition moment, the first device sends it to the second device, so that the second device aligns the first human-machine-environment data with second human-machine-environment data obtained by the second device based on the calibrated acquisition moment — 405

FIG. 4

The second device initiates a human-machine-environment data acquisition task within the local area network of the second device, so that at least one first device acquires the human-machine-environment data acquisition task ⌐501

The second device performs message interaction with the first device, so that the first device acquires timestamps during a message interaction process, and determines a time offset of the first device relative to the second device based on the timestamps, where the timestamps include clock information of the second device, and the clock information of the second device is a calibration clock for the current acquisition task ⌐502

The second device receives first human-machine-environment data sent by the first device and an calibration moment bound with the first human-machine-environment data ⌐503

The second device aligns the first human-machine-environment data with the second human-machine-environment data obtained by the second device based on the calibration moment bound with the first human-machine-environment data ⌐504

FIG. 5

⌐600

**Electronic Device**

**Receiving Unit** ⌐601

**Processing Unit** ⌐602

**Sending Unit** ⌐603

FIG. 6

# EUROPEAN SEARCH REPORT

**Application Number**

EP 25 19 3147

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 113 965 285 B (UNIV SHANGHAI JIAOTONG; SHANGHAI WEST HONGQIAO NAVIGATION TECH CO LTD) 18 October 2022 (2022-10-18)<br>* paragraph [0001] - paragraph [0005] *<br>* paragraph [0007] - paragraph [0034] *<br>* paragraph [0043] - paragraph [0075] *<br>* figures 1-6 * | 1-15 | INV.<br>H04J3/06 |
| X | CN 117 118 553 A (HUAWEI TECH CO LTD) 24 November 2023 (2023-11-24)<br>* paragraph [0001] - paragraph [0003] *<br>* paragraph [0007] - paragraph [0018] *<br>* paragraph [0046] - paragraph [0050] *<br>* paragraph [0053] - paragraph [0088] *<br>* paragraph [0124] * | 1-15 | |
| A | EP 3 841 967 A1 (BURTON DAVID [AU]) 30 June 2021 (2021-06-30)<br>* paragraph [0001] - paragraph [0004] *<br>* paragraph [0008] * | 1-15 | |
| A | ROB DOUGLAS ET AL: "Remote calibration of time from NTP servers", METROLOGIA, INSTITUTE OF PHYSICS PUBLISHING, BRISTOL, GB, vol. 55, no. 6, 9 November 2018 (2018-11-09), pages 855-862, XP020332583, ISSN: 0026-1394, DOI: 10.1088/1681-7575/AAE940 [retrieved on 2018-11-09]<br>* the whole document * | 1-15 | **TECHNICAL FIELDS SEARCHED (IPC)**<br><br>H04J |

The present search report has been drawn up for all claims

| Place of search | Date of completion of the search | Examiner |
|---|---|---|
| The Hague | 15 December 2025 | Roldán Andrade, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 19 3147

This annex lists the patent family members relating to the patent documents cited in the above-mentioned European search report.
The members are as contained in the European Patent Office EDP file on
The European Patent Office is in no way liable for these particulars which are merely given for the purpose of information.

15-12-2025

| Patent document cited in search report | | Publication date | Patent family member(s) | | Publication date |
|---|---|---|---|---|---|
| CN 113965285 | B | 18-10-2022 | NONE | | |
| CN 117118553 | A | 24-11-2023 | NONE | | |
| EP 3841967 | A1 | 30-06-2021 | AU | 2016205850 A1 | 27-07-2017 |
| | | | AU | 2018250529 B2 | 30-04-2020 |
| | | | AU | 2022203028 A1 | 26-05-2022 |
| | | | AU | 2024213183 A1 | 03-10-2024 |
| | | | CA | 2968645 A1 | 14-07-2016 |
| | | | CA | 3080600 A1 | 14-07-2016 |
| | | | CA | 3081166 A1 | 14-07-2016 |
| | | | CA | 3156908 A1 | 14-07-2016 |
| | | | CA | 3236086 A1 | 14-07-2016 |
| | | | CN | 107438398 A | 05-12-2017 |
| | | | CN | 112998649 A | 22-06-2021 |
| | | | CN | 112998650 A | 22-06-2021 |
| | | | EP | 3242587 A1 | 15-11-2017 |
| | | | EP | 3841967 A1 | 30-06-2021 |
| | | | EP | 4306041 A1 | 17-01-2024 |
| | | | EP | 4523734 A2 | 19-03-2025 |
| | | | JP | 7421262 B2 | 24-01-2024 |
| | | | JP | 7685867 B2 | 30-05-2025 |
| | | | JP | 7685868 B2 | 30-05-2025 |
| | | | JP | 2018505759 A | 01-03-2018 |
| | | | JP | 2021121323 A | 26-08-2021 |
| | | | JP | 2021121324 A | 26-08-2021 |
| | | | JP | 2025090636 A | 17-06-2025 |
| | | | KR | 20170129689 A | 27-11-2017 |
| | | | KR | 20210008848 A | 25-01-2021 |
| | | | KR | 20220082852 A | 17-06-2022 |
| | | | KR | 20240001168 A | 03-01-2024 |
| | | | KR | 20250156824 A | 03-11-2025 |
| | | | WO | 2016110804 A1 | 14-07-2016 |

EPO FORM P0459

For more details about this annex : see Official Journal of the European Patent Office, No. 12/82